(19) **Europäisches Patentamt**
**European Patent Office**
**Office européen des brevets**

(11) **EP 0 437 742 B1**

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int Cl.6: **C08K 5/00**, C08L 33/10, C08J 3/20, D06N 3/08

(21) Anmeldenummer: **90124069.7**

(22) Anmeldetag: **13.12.1990**

(54) **Wässrige Polymerisatzubereitungen**

Aqueous polymeric compositions

Compositions de polymère aqueux

(84) Benannte Vertragsstaaten:
**AT BE DE ES FR GB IT NL**

(30) Priorität: **16.01.1990 DE 4000976**

(43) Veröffentlichungstag der Anmeldung:
**24.07.1991 Patentblatt 1991/30**

(73) Patentinhaber: **BASF Aktiengesellschaft D-67063 Ludwigshafen (DE)**

(72) Erfinder:
• **Fischer, Karl
W-6702 Bad Duerkheim (DE)**
• **Weyland, Peter, Dr.
W-6710 Frankenthal (DE)**

(56) Entgegenhaltungen:
EP-B- 0 100 493          DD-A- 133 099
DE-A- 3 324 479          FR-A- 2 015 280

• PATENT ABSTRACTS OF JAPAN vol. 10, no. 345 (C-386)(2401) 20 November 1986
• PATENT ABSTRACTS OF JAPAN vol. 13, no. 442 (C-641)(3790) 4 Oktober 1989

EP 0 437 742 B1

## Beschreibung

Die vorliegende Erfindung betrifft wäßrige Polymerisatzubereitungen, die keine zusätzlich vernetzend wirkenden Mittel oder Metallionen enthalten, enthaltend

a) 5 bis 60 Gew.-% wenigstens eines Polymerisats bestehend aus

A) 60 bis 85 Gew.-% wenigstens eines Polymeren A, in polymerisierter Form aufgebaut aus

- 20 bis 80 Gew.-% wenigstens eines Esters der Methacrylsäure mit 1 bis 8 C-Atome enthaltenden Alkanolen (Monomere I),

- 0,5 bis 10 Gew.-% wenigstens einer 3 bis 6 C-Atome enthaltenden $\alpha,\beta$-monoethylenisch ungesättigten Carbonsäure (Monomere II) und

- 10 bis 75 Gew.-% wenigstens eines Monomeren aus der Gruppe bestehend aus Estern der Acrylsäure mit 1 bis 8 C-Atome enthaltenden Alkanolen, Acrylnitril, Acrylamid, Methacrylamid, Styrol und N-Methylolmethacrylamid (Monomere III),

B) 0 bis 40 Gew.-% eines oder mehrerer Polymere B, in polymerisierter Form aufgebaut aus

- 30 bis 98 Gew.-% wenigstens eines Esters der Acrylsäure mit 1 bis 8 C-Atome enthaltenden Alkanolen (Monomere IV),

- 1 bis 8 Gew.-% wenigstens einer 3 bis 6 C-Atome enthaltenden $\alpha,\beta$-monoethylenisch ungesättigten Carbonsäure (Monomere V) und

- 1 bis 65 Gew.-% wenigstens eines Monomeren aus der Gruppe bestehend aus Acrylnitril, Acrylamid, Methacrylamid, Styrol, Vinylchlorid und Vinylacetat (Monomere VI) und

C) 0 bis 40 Gew.-% eines oder mehrerer, hydrophile Gruppen enthaltender, Polyurethane C, mit der Maßgabe, daß die Summe aus B und C bezogen auf die Gesamtmenge des Polymerisats a) 15 bis 40 Gew.-% beträgt,

b) 0,1 bis 14 Gew.-%, bezogen auf die Gesamtmenge der Polymeren A, B und C, äußere Weichmacher W,

c) 0 bis 20 Gew.-%, bezogen auf die Gesamtmenge der Polymeren A, B und C, natürliche und/oder synthetische Wachse,

d) wirksame Mengen an Emulgatoren E und

e) wenigstens 30 Gew.-% Wasser.

Außerdem betrifft die Erfindung das Verfahren zur Herstellung dieser wäßrigen Zubereitungen sowie die Verwendung dieser wäßrigen Zubereitungen als Bindemittel für Beschichtungen auf Leder oder Lederaustauschmaterialien wie Lederfaserwerkstoffen, insbesondere für die Abschlußschicht, die sogenannte Appretur.

Aus der DE-A 36 10 576 sind wäßrige Polymerisatdispersionen bekannt, deren Polymerisate aus einem Alkylacrylat, Acryl- oder Methacrylsäure, gegebenenfalls Methylmethacrylat, Acrylnitril und gegebenenfalls weiteren Comonomeren, die keine sauren, basischen oder vernetzenden Gruppen aufweisen, aufgebaut sind und deren Herstellung in Gegenwart bestimmter Mengen organischer Peroxoverbindungen und bestimmter Mengen anionischer Emulgatoren, vorzugsweise unter Verwendung nichtionischer Emulgatoren, erfolgt. Diese wäßrigen Polymerisatdispersionen werden als Bindemittel für Beschichtungen auf Leder, unter anderem auch für die Appretur, empfohlen. Nachteilig an diesen wäßrigen Dispersionen ist jedoch, daß zur Erzielung erhöhter Naß- und Trockenreibechtheiten der beschichteten Leder die Mitverwendung von Epoxid- und Aziridinvernetzern erforderlich ist. Als Reibechtheit wird der Widerstand gegen Reibbeanspruchung der beschichteten Lederoberfläche bezeichnet.

Aus der EP-B 100 493 ist ein Verfahren zur Oberflächenveredelung von Leder oder Lederaustauschmaterial bekannt, bei dem für die abschließende Beschichtung eine wäßrige Dispersion verwendet wird, die ein Polymerisat eindispergiert enthält, das, bezogen auf das Polymerisat, 20 bis 40 Gew.-% Styrol, 50 bis 75 Gew.-% wenigstens eines $C_1$- bis $C_6$-Alkylesters der Acryl- und/oder Methacrylsäure, 1 bis 10 Gew.-% Acryl- und/oder Methacrylsäure und 1 bis 5 Gew.-% N-Methylolacryl- und/oder methacrylamid einpolymerisiert enthält. Nachteilig an diesen wäßrigen Dispersionen ist jedoch, daß sie die Mitverwendung 2-wertiger Metallionen erfordern.

Die DE-A 18 11 247 betrifft wäßrige Zubereitungen, die ein Verlaufsmittel oder einen Weichmacher, ein Wachs, ein wachslösliches und/oder alkalilösliches Harz, ein Benetzungs-, Emulgier- oder Dispergiermittel, gegebenenfalls Metallionen und hauptsächlich aus Alkylacrylaten aufgebaute Emulsionscopolymere enthalten. Diese Zubereitungen können u.a. zur Imprägnierung von Leder verwendet werden, bevorzugt werden sie jedoch zum Polieren von Fußböden oder Möbeln empfohlen. Nachteilig an diesen Zubereitungen, im Hinblick auf eine Verwendung als Bindemittel für Beschichtungen auf Leder, ist jedoch ihre mangelhafte Wasserbeständigkeit im verfestigten Zustand, eine Eigenschaft, die bei einer Verwendung zum Polieren von Fußböden oder Möbeln erwünscht ist.

Der vorliegenden Erfindung lag daher die Aufgabe zugrunde, wäßrige Zubereitungen zur Verfügung zu stellen, die, ohne zusätzliche Mitverwendung von vernetzend wirkenden Mitteln oder Metallionen, insbesondere als Bindemittel für erhöhte Naß- und Trockenreibechtheiten aufweisende Appreturen auf Leder geeignet sind. Demgemäß wurden die eingangs definierten wäßrigen Polymerisatzubereitungen gefunden.

Als Monomeres I ist insbesondere Methylmethacrylat von Interesse, das vorzugsweise als alleiniges Monomeres I eingesetzt wird, wobei in vorteilhafter Weise, bezogen auf das Polymere A, 20 bis 70, besonders bevorzugt 39 bis 65 Gew.-% Methylmethacrylat in A einpolymerisiert werden. Bevorzugte Monomere II sind die Acryl- und Methacrylsäure. Besonders vorteilhafte Polymere A enthalten 1 bis 5 Gew.-% der Monomeren II. Als Monomere III kommen insbesondere die Acrylsäureester des Ethanols und n-Butanols sowie Styrol und Acrylnitril in Betracht. Der Gewichtsanteil dieser bevorzugten Monomeren III an A beträgt vorzugsweise 34 bis 60 Gew.-%.

Besonders geeignete Monomere IV sind das Ethylacrylat und das n-Butylacrylat, wohingegen von den Monomeren V die Acryl- und Methacrylsäure bevorzugt werden. Als Monomere VI kommen insbesondere Acrylnitril, Styrol, Acrylamid und Methacrylamid in Betracht.

Die Polyurethane C sind aus den in der Polyurethanchemie bekannten aliphatischen, cycloaliphatischen und/oder aromatischen organischen Isocyanaten I, Polyolen P und gegebenenfalls Kettenverlängerungsmitteln K sowie aus wenigstens einer anionisch ionisierten Verbindung S, die, neben wenigstens einer gegenüber Isocyanatgruppen reaktionsfähigen Gruppe, als anionische Funktion wenigstens eine Carboxylat- und/oder Sulfonatgruppe enthält, und gegebenenfalls einer oder mehreren nichtionischen hydrophilen Verbindung N aufgebaut, wobei letztere wenigstens eine gegenüber Isocyanatgruppen reaktionsfähige Gruppe aufweisen und innerhalb von einer Etherkette end- und/oder seitenständig alkoxyliert sind.

Vorzugsweise enthalten die Polyurethane C im Polymeren $0,5 \cdot 10^{-4}$ bis $15 \cdot 10^{-4}$, besonders bevorzugt $1 \cdot 10^{-4}$ bis $8 \cdot 10^{-4}$ Gramm-Äquivalente anionisch ionisierter Gruppen pro Gramm Polyurethan und, bezogen auf das Polyurethan, 0 bis 10 Gew.-% an innerhalb von Etherketten end- und/oder seitenständig angeordneten Ethylenoxid-Einheiten. Zum Aufbau der Polyurethane C besonders geeignete Polyisocyanate I sind das 1,6-Hexandiisocyanat, das 1-Isocyanato-3,5,5-trimethyl-5-isocyanato-methylcyclohexan, das 4,4'-Diisocyanatodicyclohexylmethan, 2,4- und 2,6-Toluoldiisocyanat sowie deren Isomerengemische. Besonders geeignete Polyole P sind Polyhydroxypolyester, Polyhydroxycarbonate und Polyhydroxyether, die vorzugsweise nur zwei endständige alkoholische Hydroxylgruppen tragen und ein zahlenmittleres Molekulargewicht von 500 bis 5000 aufweisen. Als Kettenverlängerungsmittel K kommen vor allem Verbindungen in Betracht, die wenigstens zwei gegenüber Isocyanatgruppen reaktionsfähige Wasserstoffe enthalten und ein zahlenmittleres Molekulargewicht von 18 bis 400 aufweisen, z.B. Diole wie Ethylenglycol, 1,4-Butandiol, 1,5-Pentandiol, 1,6-Hexandiol oder Neopentylglycol, Diamine wie 1,2-Ethylendiamin, 1,6-Hexamethylendiamin, Isophorondiamin, Piperazin oder 4,4'-Diaminodicyclohexylmethan sowie mehr als zweiwertige Polyamine wie Diethylentriamin.

Zum Einbau anionischer Funktionen in die Polyurethane C eigenen sich insbesondere Alkalimetallsalze von Aminocarbon- oder -sulfonsäuren wie die Natriumsalze von Diaminocarbonsäuren, z.B. das Additionsprodukt aus 1,2-Ethylendiamin und dem Natriumsalz der Acrylsäure, oder Diaminosulfonsäuren sowie Alkalimetallsalze von Hydroxycarbonsäuren wie das Na-Salz der Dimethylolpropionsäure. Es können aber auch die Säuren selbst in die Polyurethane C eingebaut und nach ihrem Einbau durch Neutralisation in die entsprechenden anionischen Funktionen überführt werden.

Besonders geeignete Verbindungen N sind einwertige Polyetherole, die ein zahlenmittleres Molekulargewicht $\overline{M}_n$ von 500 bis 10000, bevorzugt von 1000 bis 5000, aufweisen und durch Alkoxylierung einwertiger Alkanole wie Methanol oder n-Butanol erhältlich sind. Als Alkoxylierungsmittel werden dabei mit Vorteil Ethylenoxid oder Mischungen aus Ethylenoxid und anderen Alkylenoxiden, insbesondere Propylenoxid, eingesetzt, wobei die Mischungen mindestens 40, vorzugsweise mindestens 65 Gew.-% Ethylenoxid enthalten. Reine Ethoxylierungsprodukte sind besonders bevorzugt.

Da die erfindungsgemäßen wäßrigen Zubereitungen die Polymeren A und B in disperser Verteilung enthalten, werden die Polymeren A und B zweckmäßigerweise durch Polymerisation der jeweiligen Monomeren in wäßrigem Medium unter den bekannten Bedingungen der Emulsionspolymerisation in Gegenwart von wasserlöslichen radikalbildenden Initiatoren und Emulgatoren E sowie gegebenenfalls in Gegenwart von Schutzkolloiden und Reglern sowie weiterer Hilfsmittel hergestellt.

Als Emulgatoren E haben sich insbesondere nichtionische und anionische Tenside bewährt. Vorzugsweise eingesetzte nichtionische Tenside sind ethoxylierte Alkanole (EO-Grad: 6 bis 50, Alkylrest: $C_8$ bis $C_{18}$), ethoxylierte Alkylphenole (EO-Grad: 6 bis 50, Alkylrest: $C_8$ bis $C_{12}$) und ethoxylierte aliphatische Monocarbonsäuren (EO-Grad: 6 bis 50, Alkylrest: $C_{12}$ bis $C_{18}$). Vorzugsweise eingesetzte anionische Tenside sind die Alkalimetallsalze der sulfatierten Derivate von 6 bis 18 C-Atome enthaltenden Alkanolen, ethoxylierten Alkanolen (EO-Grad: 4 bis 30, Alkylrest: $C_{12}$ bis $C_{18}$) und von ethoxylierten Alkylphenolen (EO-Grad: 4 bis 30, Alkylrest: $C_6$ bis $C_{12}$) sowie die Alkalimetallsalze von 12 bis 18 C-Atome enthaltenden Alkansulfonsäuren.

Als wasserlösliche Polymersationsinitiatoren kommen vor allem Peroxide wie die Alkalimetallperoxidisulfate, Wasserstoffperoxid oder kombinierte Systeme, die ein organisches Reduktionsmittel, ein Peroxid und eine geringe Menge einer im Polymerisationsmedium löslichen Metallverbindung, deren metallische Komponente in mehreren Wertigkeitsstufen auftreten kann, enthalten, z.B., Ascorbinsäure/Eisen(II)sulfat/Natriumperoxidisulfat, in Betracht, wobei an Stelle von Ascorbinsäure auch häufig das Natriumsalz der Hydroxymethansulfinsäure oder Natriumsulfit eingesetzt wird. Die Emulsionspolymerisationstemperatur und die verwendete Menge an Polymerisationsinitiatoren wird in an sich bekannter Weise so bemessen, daß ein gewichtsmittleres Molekulargewicht der Polymeren A, B von $10^5$ bis $10^6$ erhalten wird. In der Regel beträgt die Emulsionspolymerisationstemperatur 30 bis 90, vorzugsweise 50 bis 85°C und die Polymerisationsinitiatoren werden üblicherweise in Mengen, bezogen auf die Monomeren, von 0,1 bis 1,5 Gew.-% eingesetzt. Die eingesetzte Emulgatormenge bestimmt im wesentlichen den mittleren Durchmesser der resultierenden dispergierten Polymerteilchen.

Ein Maß für den mittleren Durchmesser der dispergierten Polymerteilchen ist die Lichtdurchlässigkeit (LD-Wert) der wäßrigen Polymerdispersion. Im allgemeinen werden die Polymere A, B in wäßriger Emulsion so hergestellt, daß die resultierenden Ausgangsdispersionen bei einer Verdünnung auf einen Feststoffgehalt von 0,01 Gew.-% einen LD-Wert, gemessen mit einem handelsüblichen Photometer (bei einer Wellenlänge von 0,546 µm) bei einer Schichtdicke von 25 mm relativ zu Wasser (dem willkürlich ein LD-Wert von 100 zugeordnet wird), von 30 bis 95 aufweisen. Um derartige Ausgangsdispersionen zu erhalten, werden in der Regel, bezogen auf die Menge an Monomeren, 0,5 bis 5 Gew.-% an Emulgatoren E eingesetzt.

Die Herstellung von die Polymeren C in disperser Verteilung enthaltenden wäßrigen Ausgangsdispersionen ist ebenfalls bekannt und kann z.B. nach dem Acetonverfahren, dem Prepolymermischverfahren, dem Schmelzdispergierverfahren oder dem Ketimin-Ketazin-Verfahren erfolgen. Diese Verfahren sind u.a. beschrieben in der DE-A 276 482, der DE-A 14 95 745, der DE-A 14 95 847, der DE-A 26 45 779, der DE-A 26 51 506 sowie in "Die Angewandte Makromolekulare Chemie 98 (1981) 133-165", "Progress in Org. Coat. 9 (1981) 281-340" oder "J. Coat. Technol. 58 (1986) No. 738, 49-54.

Dabei werden die zur Herstellung der Polyurethane C vorgesehenen Ausgangsverbindungen I, P, S sowie gegebenenfalls K und N in solchen Mengen eingesetzt, daß das Verhältnis der Isocyanatgruppen zu den mit Isocyanat reaktionsfähigen Gruppen, z.B. Hydroxyl- sowie primäre und sekundäre Aminogruppen, 0,9 bis 1,2, vorzugsweise 0,98 bis 1,05 beträgt. Werden Kettenverlängerer K mitverwendet, ist das molare Verhältnis von K zu P vorzugsweise kleiner als 8 und besonders bevorzugt kleiner als 6.

Besonders zweckmäßig ist die Anwendung des Acetonverfahrens, bei dem ein NCO-endständiges Prepolymer z.B. in der Schmelze hergestellt, anschließend in Aceton gelöst und durch Zugabe von Wasser dispergiert wird. Abschließend wird das Aceton abdestilliert. In der Regel werden die die Polymeren A, B, C enthaltenden Ausgangsdispersionen mit einem Feststoffgehalt von 20 bis 60 Gew.-% hergestellt.

Als äußere Weichmacher W eignen sich u.a. Carbonsäureester wie Oxybenzoesäureoctylester, z.B. 2-Ethylhexyl-p-hydroxybenzoat, Dicarbonsäureester wie Dioctyladipate, die entsprechenden Phthalsäureester oder Phosphorsäureester wie Tri-n-butylphosphat. Von besonderem Interesse als äußere Weichmacher sind die Octyldiphenylphosphate und das Tributoxyethylphosphat, da bei Verwendung dieser Verbindungen, bezogen auf die Gesamtmenge der Polymeren A, B und C vorzugsweise in Mengen von 4 bis 8 Gew.-%, von denen das 2-Ethylhexyldiphenylphosphat besonders bevorzugt ist, besonders gute Naßreibechtheiten bei der Oberflächenbeschichtung von Leder erzielt werden.

Zur Modifizierung der erfindungsgemäßen wäßrigen Zubereitungen eignen sich natürliche und synthetische Wachse wie Carnaubawachs, Schellackwachs, Montanwachs, Paraffinwachs, Polyethylenwachs, Esterwachse oder Amidwachse. Bevorzugt werden Montanwachse in Mengen von 2 bis 12 Gew.-%, bezogen auf die Gesamtmenge der Polymeren A, B und C, verwendet. Üblicherweise werden die Wachse als wäßrige Emulsionen eingesetzt. Die Herstellung der erfindungsgemäßen Zubereitungen erfolgt zweckmäßigerweise durch Einrühren der äußeren Weichmacher W in die das Polymere A enthaltende wäßrige Ausgangsdispersion und gegebenenfalls anschließendes Einrühren der Wachse sowie der die Polymeren B, C enthaltenden wäßrigen Ausgangsdispersionen in das dabei erhaltene Gemisch. Gegebenenfalls wird abschließend mit Wasser verdünnt. Hilfsweise können den erfindugsgemäßen Zubereitungen noch andere in der Lederbeschichtungstechnologie an sich bekannte Hilfsmittel zugesetzt werden. Beispiele hierfür sind u.a. Griffmittel wie Fettsäureamid-Dispersionen, Verdickungsmittel, Verlaufsverbesserer, Füllstoffe, Pigmente, Farbstoffe, Konservierungsmittel, Entschäumer, Mattierungsmittel oder Casein.

Die erfindungsgemäßen Zubereitungen eigenen sich als Bindemittel für Beschichtungen mit erhöhter Naß- und Trockenreibechtheit auf Leder oder Lederaustauschmaterialien, wobei sie vorzugsweise für die Abschlußschicht verwendet werden. Als weitere bemerkenswerte Eigenschaft weisen die mit den erfindungsgemäßen Zubereitungen hergestellten Beschichtungen eine erhöhte Heißbügelechtheit auf, d.h. die Beschichtung wird beim Heißbügeln (Temperaturen bis 200°C) weder matt noch stumpf und schmiert dabei auch nicht ab.

üblicherweise werden die erfindungsgemäßen Lederbeschichtungszubereitungen durch Gieß-, Rakel-, Streich-, Druck-, Bürst- oder Plüschverfahren, vorzugsweise jedoch im Spritzverfahren, gegebenenfalls in mehreren Schichten, auf die Leder aufgebracht und bei 60 bis 90°C getrocknet, wobei im allgemeinen zuvor eine handelsübliche Grundierschicht, normalerweise in Mengen von 20 bis 70 g Trockenmasse pro m², aufgetragen und in der Regel bei Temperaturen von 50 bis 80°C getrocknet wird. Abschließend wird zweckmäßigerweise bei Temperaturen von 80 bis 150°C auf einer Durchlaufbügelmaschine oder bei 70 bis 100°C auf einer hydraulischen Bügelpresse gebügelt. Die Auftragsmenge der erfindungsgemäßen Zubereitungen liegt normalerweise im Bereich von 5 bis 30 g Trockenmasse pro m².

Beispiele

Beispiel 1

Herstellung verschiedener erfindungsgemäßer wäßriger Zubereitungen Z1 bis Z5

Z1: In 770 g einer 40 gew.-%igen wäßrigen Ausgangsdispersion I eines Polymeren A, aufgebaut aus

35 Gew.-% n-Butylacrylat
30 Gew.-% Styrol
25 Gew.-% Methylmethacrylat
1,5 Gew.-% Methylolmethacrylamid und
8,5 Gew.-% Acrylsäure,

enthaltend, bezogen auf A, 1,5 Gew.-% des Natriummetallsalzes eines sulfatierten ethoxylierten Alkylphenols (Alkyl: $C_8$, EO-Grad: 25) und 1,9 Gew.-% Na-Laurylsulfat und in 0,01 gew.-%iger Verdünnung einen LD-Wert von 92 aufweisend, wurden 20 g Tributoxyethylphosphat eingerührt. Anschließend wurden 160 g einer 50 gew.-%igen wäßrigen Ausgangsdispersion II eines Polymeren B, aufgebaut aus

70 Gew.-% n-Butylacrylat
13 Gew.-% Acrylnitril
13 Gew.-% Styrol
2 Gew.-% Methacrylamid und
2 Gew.-% Acrylsäure,

enthaltend, bezogen auf B, 1,9 Gew.-% des Natriummetallsalzes eines sulfatierten ethoxylierten Alkylphenols (Alkyl: $C_8$, EO-Grad: 25) und in 0,01 gew.-%iger Verdünnung einen LD-Wert von 60 aufweisend, sowie 50 g einer 35 gew.-%igen Wachsemulsion auf Montanesterbasis unter Rühren zugesetzt.

Z2: In 800 g einer 40 gew.-%igen wäßrigen Ausgangsdispersion III eines Polymeren A, aufgebaut aus

55 Gew.-% Methacrylsäuremethylester
43 Gew.-% Ethylacrylat und
2 Gew.-% Acrylsäure,

enthaltend, bezogen auf A, 2 Gew.-% des Na-Salzes einer $C_{15}$-Alkylsulfonsäure und in 0,01 gew.-%iger Verdünnung einen LD-Wert von 94 aufweisend, wurden 30 g 2-Ethylhexyl-p-hydroxybenzoat eingerührt. Anschliepend wurden 140 g der wäßrigen Ausgangsdispersion II und 30 g einer 35 gew.-%igen Wachsemulsion auf Montanesterbasis unter Rühren zugesetzt.

Z3: In 800 g der wäßrigen Ausgangsdispersion III wurden 35 g Di-2-ethylhexyladipat eingerührt und anschließend 145 g der wäßrigen Ausgangsdispersion II und 20 g einer 15 gew.-%igen wäßrigen kolloidalen Caseinlösung, alkalisch aufgeschlossen und mit Caprolactam modifiziert, zugesetzt.

Z4: In 700 g der wäßrigen Ausgangsdispersion III wurden 25 g 2-Ethylhexyldiphenylphosphat eingerührt und anschließend 175 g der wäßrigen Ausgangsdispersion II und 100 g einer 35 gew.-%igen Wachsemulsion auf Montanesterbasis zugesetzt.

Z5: In 600 g der wäßrigen Ausgangsdispersion III wurden 15 g 2-Ethylhexyldiphenylphosphat eingerührt und anschließend 125 g der wäßrigen Ausgangsdispersion II und 160 g einer 40 gew.-%igen wäßrigen anionischen Polyurethandispersion gemäß Beispiel 1 der DE-A 26 45 779 und 100 g einer 35 gew.-%igen Wachsemulsion auf Montanesterbasis zugesetzt.

Beispiel 2

Anwendungsbeispiele A1 bis A4

A1: Vollnarbiges Rindnappaleder wurde mit einer handelsüblichen Zubereitung, zusammengesetzt aus

410 g Wasser

80 g Casein-freie Pigmentpräparation (Farbstoff C.I. Pigment Black 7)

60 g Mattierungsmittel auf der Basis von Kieselsäure

350 g wäßrige Dispersion gemäß Beispiel 4 der EP-B 100 493

50 g wäßrige Dispersion gemäß Beispiel 1a4) der EP-B 100493 und

50 g einer 35 gew.-%igen Wachsemulsion auf Montanesterbasis,

grundiert (zwei Spritzaufträge, Trocknen bei 70°C, Bügeln in einer hydraulischen Bügelpresse bei 80°C und 20 bar, zwei weitere Spritzaufträge, Trocknen bei 70°C, Gesamtauftragsmenge: ca. 50 g Trockenmasse/m$^2$).

Anschließend wurden als Abschlußschicht in zwei Spritzaufträgen mit Trocknen bei jeweils 70°C und abschließendem Bügeln bei 110°C in einer Durchlaufbügelmaschine ca. 25 g Trockenmasse/m2 der mit Wasser auf die Hälfte verdünnten Zubereitung Z1 aufgetragen.

Die Naßreibechtheit gemäß IUF-450 betrug 700 Reibtouren.

IUF = International Union Fastness, Norm der internationalen Echtheits-Kommission für Lederfarbstoffe und gefärbte Leder.

In einer Vergleichsbeschichtung wurde die Zubereitung Z1 durch die Appreturdispersion gemäß Beispiel 7 der EP-B 100 493 ersetzt. Die Naßreibechtheit gemäß IUF-450 betrug in diesem Fall 80 Reibtouren.

A2:     Vollnarbiges Rindoberleder wurde mit einer handelsüblichen Zubereitung, zusammengesetzt aus

      420 g Wasser
      100 g Casein-freie Pigmentpräparation (Farbstoff C.I. Pigment Black 7)
      300 g wäßrige Dispersion gemäß Beispiel 4 der EP-B 100 493
      100 g wäßrige Dispersion gemäß Beispiel 1a4) der EP-B 100 493
      50 g einer 35 gew.-%igen Wachsemulsion auf Montanesterbasis und
      10 g Farbstoff C.I. Acid Black 63 (Flüssigeinstellung)

grundiert (ein Spritzauftrag, Trocknen bei 80°C, Bügeln in einer hydraulischen Bügelpresse bei 70°C und 50 bar, ein weiterer Spritzauftrag, Trocknen bei 80°C, Gesamtauftragsmenge: ca. 40 g Trockenmasse/m$^2$).

Anschliepend wurden als Abschlußschicht (ein Spritzauftrag, Trocknen bei 80°C, ein weiterer Spritzauftrag, Trocknen bei 80°C und abschließend Bügeln bei 130°C in einer Durchlaufbügelmaschine) ca. 25 g Trockenmasse/m2 mit Wasser auf die Hälfte verdünnte Zubereitung Z4 aufgetragen.

Die Naßreibechtheit gemäß IUF-450 betrug 2000 Reibtouren.

Die Heißbügelechtheit, gemäß VESLIC C 4580, 2. Ausgabe, Sept. 1979, Prüfvorschrift des Vereins Schweizer Lederindustrie-Chemiker, betrug 190°C.

In einer Vergleichsbeschichtung wurde die Zubereitung Z4 durch die Appreturdispersion gemäß Beispiel 7 der EP-B 100 493 ersetzt. Die Naßreibechtheit gemäß IUF-450 betrug in diesem Fall 100 Reibtouren.

A3:     Schafleder wurde mit einer handelsüblichen Zubereitung, zusammengesetzt aus

      510 g Wasser
      60 g Casein-freie Pigmentpräparation (Farbstoff C.I. Pigment Black 7)
      50 g Mattierungsmittel auf der Basis von Kieselsäure
      150 g wäßrige Dispersion gemäß Beispiel 4 der EP-B 100 493
      150 g wäßrige Dispersion gemäß Beispiel 1a4) der EP-B 100 493
      30 g Wachsemulsion auf Montanesterbasis
      30 g wäßrige Fettsäureamid-Dispersion (8 gew.-%ig)
      20 g Farbstoff C.I. Acid Black 63 (Flüssigeinstellung)

grundiert (zwei Spritzaufträge, Trocknen bei 50°C, Bügeln bei 70°C in einer Bügelpresse, zwei weitere Spritzaufträge, Trocknen bei 50°C, Gesamtauftragsmenge: ca. 30 g Trockenmasse/m$^2$).

Anschließend wurden als Abschlußschicht (zwei Spritzaufträge mit jeweiligem Trocknen bei 50°C und abschließendem Bügeln in einer Druckpresse bei 80°C/20 bar) ca. 15 g Trockenmasse/m$^2$ eines Gemisches aus 500 g Z4, 480 g Wasser und 20 g einer 8 gew.-%igen wäßrigen Fettsäureamid-Dispersion aufgetragen.

Die Naßreibechtheit gemäß IUF-450 betrug 400 Reibtouren.

In einer Vergleichsbeschichtung wurde die Zubereitung Z4 durch die Appreturdispersion gemäß Beispiel 7 der EP-B 100 493 ersetzt. Die Naßreibechtheit gemäß IUF-450 betrug in diesem Fall 65 Reibtouren.

A4:     Wie A2, jedoch wurde Z4 durch Z5 ersetzt.

Die Naßreibechtheit gemäß IUF-450 betrug 1600 Reibtouren.

**Patentansprüche**

1.     Wäßrige Polymerisatzubereitungen, die keine zusätzlich vernetzend wirkenden Mittel oder Metallionen enthalten, enthaltend

      a) 5 bis 60 Gew.-% wenigstens eines Polymerisats bestehend aus

         A) 60 bis 85 Gew.-% wenigstens eines Polymeren A, in polymerisierter Form aufgebaut aus

         -    20 bis 80 Gew.-% wenigstens eines Esters der Methacrylsäure mit 1 bis 8 C-Atome enthaltenden Alkanolen (Monomere I),

- 0,5 bis 10 Gew.-% wenigstens einer 3 bis 6 C-Atome enthaltenden α,β-monoethylenisch ungesättigten Carbonsäure (Monomere II) und

- 10 bis 75 Gew.-% wenigstens eines Monomeren aus der Gruppe bestehend aus Estern der Acrylsäure mit 1 bis 8 C-Atome enthaltenden Alkanolen, Acrylnitril, Acrylamid, Methacrylamid, Styrol und N-Methylolmethacrylamid (Monomere III),

B) 0 bis 40 Gew.-% eines oder mehrerer Polymere B, in polymerisierter Form aufgebaut aus

- 30 bis 98 Gew.-% wenigstens eines Esters der Acrylsäure mit 1 bis 8 C-Atome enthaltenden Alkanolen (Monomere IV),

- 1 bis 8 Gew.-% wenigstens einer 3 bis 6 C-Atome enthaltenden α,ß-monoethylenisch ungesättigten Carbonsäure (Monomere V) und

- 1 bis 65 Gew.-% wenigstens eines Monomeren aus der Gruppe bestehend aus Acrylnitril, Acrylamid, Methacrylamid, Styrol, Vinylchlorid und Vinylacetat (Monomere VI) und

C) 0 bis 40 Gew.-% eines oder mehrerer, hydrophile Gruppen enthaltender, Polyurethane C, mit der Maßgabe, daß die Summe aus B und C bezogen auf die Gesamtmenge des Polymerisats a) 15 bis 40 Gew.-% beträgt,

b) 0,1 bis 14 Gew.-%, bezogen auf die Gesamtmenge der Polymeren A, B und C, äußere Weichmacher W,

c) 0 bis 20 Gew.-%, bezogen auf die Gesamtmenge der Polymeren A, B und C, natürliche und/oder synthetische Wachse,

d) wirksame Mengen an Emulgatoren E und

e) wenigstens 30 Gew.-% Wasser.

2. Wäßrige Zubereitungen nach Anspruch 1, die als Polyurethane C Polyurethane enthalten, die pro Gramm Polyurethan im Polymeren $0{,}5 \cdot 10^{-4}$ bis $15 \cdot 10^{-4}$ Gramm-Äquivalente anionisch ionisierter Gruppen und, bezogen auf das Polyurethan, 0 bis 10 Gew.-% an innerhalb von Etherketten end- und/oder seitenständig angeordneten Ethylenoxid-Einheiten enthalten.

3. Wäßrige Zubereitungen nach Anspruch 1 oder 2, die als Polymere A Polymere enthalten, die 40 bis 65 Gew.-% Methylmethacrylat und 1 bis 5 Gew.-% Acryl- und/oder Methacrylsäure einpolymerisiert enthalten.

4. Wäßrige Zubereitungen nach den Ansprüchen 1 bis 3, die als äußeren Weichmacher W Octyldiphenylphosphate und/oder Tributoxyethylphosphat enthalten.

5. Wäßrige Zubereitungen nach den Ansprüchen 1 bis 4, die als äußeren Weichmacher W 4 bis 8 Gew.-% 2-Ethylhexyldiphenylphosphat, bezogen auf die Gesamtmenge der Polymeren A, B und C, enthalten.

6. Verfahren zur Herstellung von wäßrigen Zubereitungen gemäß der Ansprüche 1 bis 5, dadurch gekennzeichnet, daß man in eine 20 bis 60 gew.-%ige, wenigstens ein Polymeres A in disperser Phase enthaltende wäßrige Ausgangsdispersion die äußeren Weichmacher W einrührt und anschließend in die so erhaltene Mischung die Polymeren B und/oder C enthaltende wäßrige Ausgangsdispersionen, gegebenenfalls wäßrige Wachsemulsionen sowie weitere Hilfsstoffe einarbeitet und anschließend gegebenenfalls mit Wasser verdünnt.

7. Verwendung der wäßrigen Zubereitungen gemäß den Ansprüchen 1 bis 5 als Bindemittel für Beschichtungen auf Leder oder Lederaustauschmaterialien.

**Claims**

1. An aqueous polymer formulation with no additional crosslinking agents or metal ions, containing

   a) from 5 to 60% by weight of one or more polymers consisting of

      A) from 60 to 85% by weight of one or more polymers A in polymerized form, composed of

         from 20 to 80% by weight of one or more esters of methacrylic acid with alkanols of 1 to 8 carbon atoms (monomers I),
         from 0.5 to 10% by weight of one or more α,β-monoethylenically unsaturated carboxylic acids of 3 to 6 carbon atoms (monomers II) and

from 10 to 75% by weight of one or more monomers from the group consisting of esters of acrylic acid with alkanols of 1 to 8 carbon atoms, acrylonitrile, acrylamide, methacrylamide, styrene and N-methylolmethacrylamide (monomers III),

B) from 0 to 40% by weight of one or more polymers B in polymerized form, composed of

from 30 to 98% by weight of one or more esters of acrylic acid with alkanols of 1 to 8 carbon atoms (monomers IV),

from 1 to 8% by weight of one or more $\alpha,\beta$-monoethylenically unsaturated carboxylic acids of 3 to 6 carbon atoms (monomers V) and

from 1 to 65% by weight of one or more monomers from the group consisting of acrylonitrile, acrylamide, methacrylamide, styrene, vinyl chloride and vinyl acetate (monomers VI), and

C) from 0 to 40% by weight of one or more polyurethanes C containing hydrophilic groups, with the proviso that the sum of B and C is from 15 to 40% by weight, based on the total amount of the polymer a),

b) from 0.1 to 14% by weight, based on the total amount of the polymers A, B and C, of external plasticizers W,

c) from 0 to 20% by weight, based on the total amount of polymers A, B and C, of natural and/or synthetic waxes,

d) effective amounts of emulsifiers E and

e) not less than 30% by weight of water.

2. An aqueous formulation as claimed in claim 1, which contains, as polyurethanes C, polyurethanes which contain from $0.5 . 10^{-4}$ to $15 . 10^{-4}$ gram equivalent of anionically ionized groups per gram of polyurethane in the polymer and from 0 to 10% by weight, based on the polyurethane, of ethylene oxide units arranged as terminal and/or side groups within ether chains.

3. An aqueous formulation as claimed in claim 1 or 2, which contains, as polymers A, polymers which contain from 40 to 65% by weight of methyl methacrylate and from 1 to 5% by weight of acrylic and/or methacrylic acid as polymerized units.

4. An aqueous formulation as claimed in claim 1 or 2 or 3, which contains octyl diphenyl phosphates and/or tributoxyethyl phosphate as external plasticizers W.

5. An aqueous formulation as claimed in claim 1 or 2 or 3 or 4, which contains from 4 to 8% by weight, based on the total amount of polymers A, B and C, of 2-ethylhexyl diphenyl phosphate as the external plasticizer W.

6. A process for the preparation of an aqueous formulation as claimed in claim 1 or 2 or 3 or 4 or 5, wherein the external plasticizers W are stirred into a 20-60% strength by weight aqueous starting dispersion containing one or more polymers A in the disperse phase, and the aqueous starting dispersions containing polymers B and/or C, if appropriate aqueous wax emulsions and further assistants are then incorporated into the resulting mixture and, if necessary, the mixture is then diluted with water.

7. Use of an aqueous formulation as claimed in claim 1 or 2 or 3 or 4 or 5 as a binder for coatings on leather or leather replacement materials.

**Revendications**

1. Préparations aqueuses de polymères qui ne contiennent pas en plus d'agents réticulants ni d'ions métalliques, contenant

a) 5 à à 60% en poids d'au moins un produit de polymérisation composé de

A) 60 à 85% en poids d'au moins un polymère A constitué, sous forme polymérisée, par

- 20 à 80% en poids d'au moins un ester de l'acide méthacrylique avec des alcanols contenant 1 à 8 atomes de carbone (monomères I),

- 0,5 à 10% en poids d'au moins un acide carboxylique à insaturation $\alpha,\beta$-manoéthylénique contenant 3 à 6 atomes de carbone (monomères II) et

- 10 à 75% en poids d'au moins un monomère du groupe constitué par les esters de l'acide acrylique avec des alcanols contenant 1 à 8 atomes de carbone, l'acrylonitrile, l'acrylamide, le méthacrylamide, le styrène et le N-méthylolméthacrylamide (monomères III),

B) 0 à 40% en poids d'un ou de plusieurs polymères B constitués, sous forme polymérisée, par

- 30 à 98% en poids d'au moins un ester de l'acide acrylique avec des alcanols contenant 1 à 8 atomes de carbone (monomères IV),
- 1 à 8% en poids d'au moins un acide carboxylique à insaturation $\alpha,\beta$-monoéthylénique contenant 3 à 6 atomes de carbone (monomères V) et
- 1 à 65% en poids d'au moins un monomère du groupe constitué par l'acrylonitrile, l'acrylamide, le méthacrylamide, le styrène, le chlorure de vinyle et l'acétate de vinyle (monomères VI), et

C) 0 à 40% en poids d'un ou de plusieurs polyuréthannes C contenant des groupements hydrophiles, étant spécifié que la somme de B et C est comprise entre 15 et 40% en poids par rapport à la quantité totale du produit de polymérisation a),

b) 0,1 à 14% en poids, par rapport à la quantité totale des polymères A, B et C, de plastifiants extérieurs W,

c) O à 20% en poids, par rapport à la quantité totale des polymères A, B et C, de cires naturelles et/ou synthétiques,

d) des quantités efficaces d'émulsifiants E et

e) au moins 30% en poids d'eau.

2. Préparations aqueuses selon la revendication 1 qui contiennent, en tant que polyuréthannes C, des polyuréthannes qui renferment, par gramme de polyuréthanne dans le polymère, $0,5.10^{-4}$ à $15.10^{-4}$ équivalents-grammes de groupements ionisés anioniquement et, par rapport au polyuréthanne, 0 à 10% en poids de motifs oxyde d'éthylène en position terminale et/ou latérale à l'intérieur de chaînes éther.

3. Préparations aqueuses selon la revendication 1 ou 2 qui contiennent, en tant que polymères A, des polymères qui renferment en liaison polymère 40 à 65% en poids de méthacrylate de méthyle et 1 à 5% en poids d'acide acrylique et/ou méthacrylique.

4. Préparations aqueuses selon l'une quelconque des revendications 1 à 3 qui contiennent, en tant que plastifiants extérieurs W, des phosphates d'octyle et de diphényle et/ou du phosphate de tributoxyéthyle.

5. Préparations aqueuses selon l'une quelconque des revendications 1 à 4 qui contiennent, en tant que plastifiants extérieurs W, 4 à 8% en poids de phosphate de 2-éthylhexyle et de diphényle, par rapport à la quantité totale des polymères A, B et C.

6. Procédé de production de préparations aqueuses selon l'une quelconque des revendications 1 à 5, caractérisé en ce que l'on incorpore les plastifiants extérieurs W dans une dispersion aqueuse de départ à 20-60% en poids, contenant au moins un polymère A dans la phase dispersée, on incorpore ensuite, dans le mélange ainsi obtenu, des dispersions aqueuses de départ contenant les polymères B et/ou C, éventuellement des émulsions aqueuses de cire, ainsi que d'autres produits auxiliaires, puis on dilue éventuellement à l'eau.

7. Utilisation des préparations aqueuses selon l'une quelconque des revendications 1 à 5 comme liant dans des produits d'enduction pour cuir ou pour des matières de remplacement du cuir.